# EUROPÄISCHE PATENTSCHRIFT

(11) **EP 1 424 541 B1**
(45) Veröffentlichungstag und Bekanntmachung des Hinweises auf die Patenterteilung: **22.04.2015**
(21) Anmeldenummer: 03026000.4
(22) Anmeldetag: 14.11.2003
(51) Int. Cl.: G01D 5/14, G01L 3/10, G01L 5/22, B62D 6/10

(54) **Vorrichtung zum Bestimmen eines auf eine Welle ausgeübten Drehmoments**
Apparatus for determining the torque applied to a shaft
Dispositif pour déterminer le couple appliqué à un axe de rotation

(30) Priorität: 28.11.2002 DE 10256322
(43) Veröffentlichungstag der Anmeldung: 02.06.2004
(73) Patentinhaber: Valeo Schalter und Sensoren GmbH, 74321 Bietigheim-Bissingen (DE)
(72) Erfinder: Jerems, Frank, Dr., 74369 Löchgau (DE); Fröhlich, Ekkehart, 74226 Nordheim (DE); Proft, Matthias, 74936 Siegelsbach (DE); Rachui, Dirk, 74321 Bietigheim-Bissingen (DE)
(74) Vertreter: Pothmann, Karsten

(56) Entgegenhaltungen:
- EP-A- 0 271 633
- FR-A- 2 821 668
- US-A1- 2002 189 371

## Beschreibung

Die Erfindung betrifft eine Vorrichtung zum Bestimmen eines auf eine Welle ausgeübten Drehmoments, wobei die Welle einen ersten Wellenabschnitt und einen zweiten Wellenabschnitt aufweist und die beiden Wellenabschnitte gegeneinander verdrehbar sind, mit einem den ersten Wellenabschnitt umgebenden und mit diesem verbundenen Multipol-Magnetring und einem am zweiten Wellenabschnitt befestigten Statorhalter, wobei am Statorhalter zwei Statorelemente befestigt sind und jedes Statorelement in axialer Richtung abragende Finger aufweist, die gleichmäßig zumindest über einen Teil des Umfangs verteilt angeordnet sind und dazwischen sich Lücken befinden.

Derartige Vorrichtungen werden dafür verwendet, um zum Beispiel bei Kraftfahrzeugen das auf eine Lenkwelle ausgeübte Drehmoment zu bestimmen, welches für elektrische Lenkhilfen notwendig ist. Dabei wird angestrebt, dass der Sensor vollständig berührungslos und somit verschleißfrei arbeitet.

Aus der WO 00 00 377 A1 ist ein sich mit der Welle mitdrehender Magnetsensor bekannt, mit dem die relative Verdrehung von Wellenteilen erfassbar ist. Das Signal des Magnetsensors wird über eine Wickelfeder (aufgewickeltes Leitungsband) oder über Schleifringe an das ortsfeste Steuergerät übertragen. Diese Ausführungsform besitzt den Nachteil, dass sie nicht vollständig berührungslos arbeitet und daher nicht verschleißfrei ist.

Bei einer anderen Ausführungsform (US 6,250,420) sind an beiden Wellenteilen zwei gleichartige Multipolmagnetringe angebracht, die getrennt von zwei Magnetsensoren inkrementell gemessen werden. Aus dem Phasenversatz der Inkrementalsignale lässt sich im Steuergerät die relative Verdrehung ermitteln. Diese Ausführungsform besitzt den Nachteil, dass Unterschiede bei den Kennlinien der Magnetsensoren oder bei der Magnetisierung der Multipolmagnetringe (Polteilung) direkt in das Ausgangssignal eingehen und zu einem Messfehler führen. Die notwendige Genauigkeit der Multipolmagnetringe ist nur sehr schwer erreichbar.

Aus der US 5,195,382 ist eine Vorrichtung bekannt, bei der an beiden Wellenteilen gleichartige Multipolmagneträder eng zueinander benachbart angeordnet sind. Eine relative Verdrehung der beiden Räder bewirkt eine Änderung des sich dazwischen ausbildenden Feldlinienverlaufs. Ein Magnetsensor befindet sich zwischen den beiden Ringen und misst diese Änderung. Diese Vorrichtung hat den Nachteil, dass beide Magnetringe sehr genau gleich magnetisiert sein müssen hinsichtlich der Polteilung und der Polstärke und dass mechanische Toleranzen wie Abstandsänderungen der Ringe direkt in das Ausgangssignal eingehen.

Aus der FR 2,821,668 A1 ist eine Vorrichtung bekannt, bei welcher der Sensor aus einem diskret aufgebauten Multipolmagnetring und zwei ineinander geschachtelten weichmagnetischen Statoren besteht. Diese Statoren besitzen auf der radialen Innenseite fingerförmige Strukturen, welche die Magnetpole abtasten, sowie auf der radialen Außenseite einen ringförmigen Spalt, in welchem sich ein ortsfester Magnetsensor befindet. Bei dieser Vorrichtung hat sich als nachteilig herausgestellt, dass der Magnetsensor radial montiert werden muss, und dass der Magnetfluss nicht optimal ausgenutzt wird, da gegenpolige Finger direkt benachbart gegenüberstehen und einen mit dem eigentlichen Luftspalt konkurrierenden Nebenschluss bilden. Die Polteilung muss durch diskreten Aufbau des Magnetrades relativ grob gewählt werden (Polbreite 20°), was einen ebenso großen Linearitätsbereich bewirkt, der aber nicht vollständig ausgenutzt wird, da der Bereich des zu messenden Winkels bei den geforderten Steifigkeiten des Torsionsstabes nur etwa ± 3° bis 5° beträgt.

Weitere Drehmomentsensoren sind aus der US 2002/0189371 A1 und aus der EP 0 271 633 A2 bekannt.

Ausgehend von der FR 2,821,668 A1 liegt der Erfindung die Aufgabe zugrunde, einen berührungslos arbeitenden Drehmomentsensor bereitzustellen, der bei einem einfachen Aufbau eine größere Empfindlichkeit besitzt.

Diese Aufgabe wird erfindungsgemäß mit einer Vorrichtung gelöst, die die Merkmale des Anspruchs 1 aufweist.

Die erfindungsgemäße Vorrichtung hat den wesentlichen Vorteil, dass die Gefahr eines magnetischen Nebenschlusses ausgeschlossen wird, da gegenpolige Finger nicht auf dem gleichen Radius benachbart einander gegenüberstehen, sondern innerhalb bz.w außerhalb des Magnetringes angeordnet sind. Daher kann die Polteilung relativ fein gewählt werden, wodurch die Auflösung verbessert wird. Der erfindungsgemäße Drehmomentsensor arbeitet berührungslos und weist keine beweglichen Teile auf. Das vom Drehmomentsensor gelieferte Signal ist ein direktes Maß für das Drehmoment und muss daher nicht noch aufwendig ausgewertet oder umgewandelt werden. Außerdem kann durch die Verwendung von zwei Magnetfeldsensoren im Luftspalt auf einfach Weise eine Redundanz realisiert werden. Auch die Montage des Drehwinkelsensors ist einfach, da er axial auf die Welle aufgeschoben wird. Vorteilhaft sind die Finger mittig den Übergängen zwischen den Polen des Magnetringes zugeordnet.

Bei einer Weiterbildung der Erfindung ist vorgesehen, dass die Finger der beiden Statorelemente einander radial gegenüberliegen. Da die Magnetpole des Magneten radial polarisiert sind, werden die Finger des einen Statorelements mit dem einen Pol aufmagnetisiert und die Finger des anderen Statorelements mit dem anderen Pol aufmagnetisiert. Im magnetischen Rückschluss befindet sich der Magnetfeldsensor, der die magnetische Induktion in den Statorelementen ermittelt.

Da gemäß der Erfindung die Finger der Statorelemente jedem zweiten Magnetpol zugeordnet sind, werden sie von den benachbarten anderspoligen Polen des Magnetringes nicht beeinflusst.

Um den in jedem Finger induzierten Magnetfluss zu bündeln weist jedes Statorelement einen Magnetflussring auf, von welchem die Finger abragen, wobei die Magnetflussringe der beiden Statorelemente den Magnetfeldsensor zwischen sich aufnehmen, so dass über diesen Magnetfeldsensor der in den Statorelementen induzierte Magnetfluss direkt erfasst werden kann.

Um den Luftspalt zwischen den Statorelementen und dem dazwischen angeordneten Magnetfeldsensor so gering wie möglich zu halten, sind die freien Außenkanten wenigstens eines der beiden Magnetflussringe, bevorzugt beider Magnetflussringe in Richtung zueinander abgebogen beziehungsweise abgewinkelt. Auf diese Weise kann der Luftspalt exakt an die Dimension des Magnetfeldsensors angepasst werden, ohne dass die Position der Finger der Statorelemente bezüglich des Magneten beeinflusst wird. Geringe Rundlauffehler wirken sich nicht auf das Messergebnis aus, da die Gesamtspaltbreite erhalten bleibt und sich lediglich die Position des Magnetfeldsensors innerhalb des Spalts ändert.

Bei einer besonders bevorzugten Ausführungsform ist vorgesehen, dass die Anzahl der Finger eines Statorelements der Anzahl der Polpaare des Magneten entspricht.

Um eine optimale Auflösung zu erreichen weist jedes Statorelement 36 Finger auf. Dies bedeutet, dass die Polbreite 10° entspricht, so dass der Linearitätsbereich mit dem zu messenden Winkelbereich nahezu deckungsgleich ist. Es ergibt sich hierdurch bei gleichem Drehmoment ein größeres Ausgangssignal als beim Stand der Technik, was gleichbedeutend mit einem besseren Signal/Rauschverhältnis ist. Falls erforderlich, kann die Anzahl der Finger auch erhöht werden.

Gemäß einem bevorzugten Ausführungsbeispiel ist der Magnetring aus einem kunststoffgebundenen Magnetmaterial hergestellt, was den Vorteil hat, dass er wesentlich preisgünstiger ist und dass er genauer hergestellt werden kann, als ein diskreter Magnetring.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im einzelnen beschrieben ist. Dabei können die in der Zeichnung gezeigten und in den Ansprüchen sowie in der Beschreibung erwähnten Merkmale jeweils einzeln für sich oder in beliebiger Kombination erfindungswesentlich sein.

In der Zeichnung zeigen:
- Figur 1: eine perspektivische Darstellung des erfindungsgemäßen, an einer Welle angeordneten Drehmomentsensors, teilweise geschnitten;
- Figur 2: eine Schnittansicht in Richtung des Pfeils II gemäß Figur 1;
- Figur 3: eine schematische Darstellung der Relativposition von Magnetring und Stator ohne an der Welle wirkendem Drehmoment (Figur 3a) und bei aufgebrachtem Drehmoment (Figur 3b);
- Figur 4: eine perspektivische Darstellung des erfindungsgemäßen, an einer Welle angeordneten Drehmomentsensors mit Magnetflusskonzentrator, teilweise geschnitten; und
- Figur 5: eine Schnittansicht in Richtung des Pfeils V gemäß Figur 4.

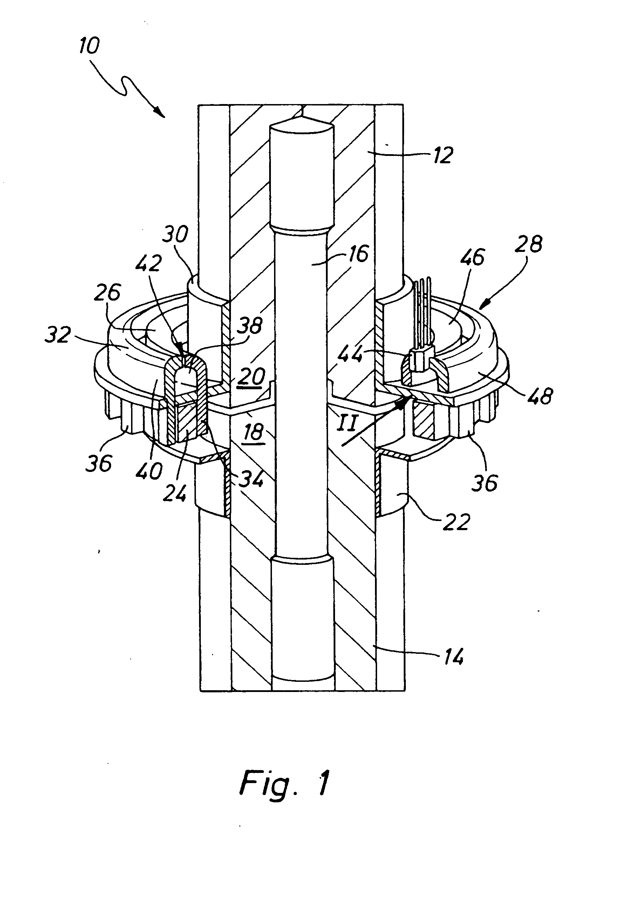

Die Figur 1 zeigt eine insgesamt mit 10 bezeichnete Lenkwelle eines Kraftfahrzeugs, von der zwei Wellenabschnitte 12 und 14 erkennbar sind. Die beiden Wellenabschnitte 12 und 14 sind über eine Torsionsstabfeder 16 miteinander verbunden, so dass ihre freien, einander zugewandten Enden 18 und 20 dann relativ zueinander verdreht werden, wenn auf die Lenkwelle 10 ein Drehmoment aufgebracht wird. Am Ende 20 des Wellenabschnitts 14 ist ein Magnetringhalter 22 befestigt, welcher einen insgesamt mit 24 bezeichneten Mulipol-Magnetring trägt. Dieser Magnetring 24 umgibt die Lenkwelle 10 mit radialem Abstand, so dass zwischen dem Magnetring 24 und der Lenkwelle 10 ein Statorelement 26 eingreifen kann.

Dieses Statorelement 26 ist Teil eines insgesamt mit 28 bezeichneten Stators, der an einem Statorhalter 30 befestigt ist. Dieser Statorhalter 30 ist wiederum am freien Ende 18 des Wellenabschnitts 12 angebracht. Dem ersten Statorelement 26 liegt ein zweites Statorelement 32 radial gegenüber und wird, wie das erste Statorelement 26, vom Statorhalter 30 gehalten und sicher positioniert. Von beiden Statorelementen 26 und 32 ragen nach unten Finger 34 und 36 ab, die zwischen sich den Magnetring 24 aufnehmen.

Die beiden Statorelemente 26 und 32 sind aus weichmagnetischem Material gefertigt.

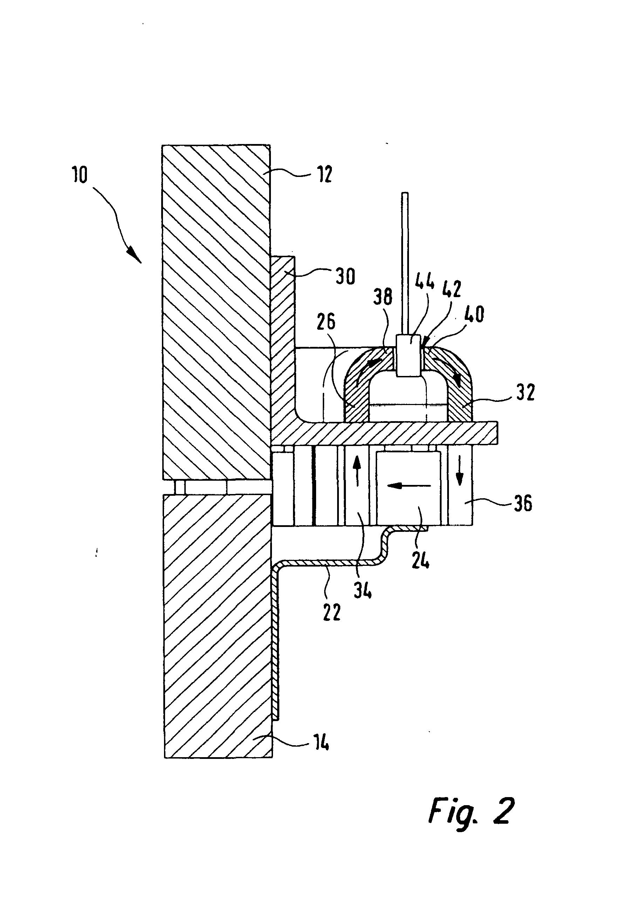

Ferner ist in der Figur 1 erkennbar, dass die freien oberen Enden 38 und 40 der beiden Statorelemente 26 und 32 in Richtung zueinander abgebogen sind und einen Spalt 42 bilden. In diesem Spalt 42 ist ein Magnetfeldsensor 44 angeordnet, und liegt den beiden Enden 38 und 40 direkt gegenüber, was aus Figur 2 deutlich erkennbar ist. Die Finger 34 und 36 ragen jeweils von einem Magnetflussring 46 und 48 ab, die den in den Fingern 34 und 36 jeweils induzierten Magnetfluss zusammenführen und in Richtung des Magnetfeldsensors 44 leiten. Ferner ist erkennbar, dass die Statorelemente 26 und 32 im wesentlichen L-förmig abgebogen sind und mit ihren Stirnseiten dem Magnetfeldsensor 44 zugewandt sind.

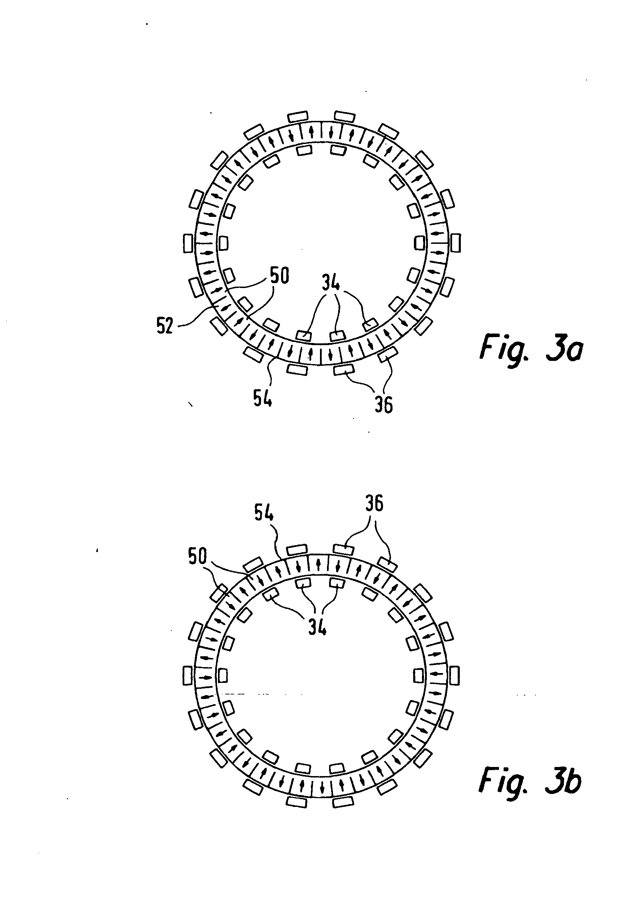

Den Figuren 3a und 3b kann die Stellung der einzelnen Finger 34 und 36 bezüglich der Pole 50 und 52 des Magnetringes 24 entnommen werden. Außerdem ist ersichtlich, dass die Finger 34 und 36 einander radial gegenüberliegen.

In der Figur 3a wird auf die Lenkwelle 10 kein Drehmoment aufgebracht, so dass die Figur 3a den Ruhezustand zeigt. Dabei ist deutlich erkennbar, dass die Finger 34 und 36 jeweils den Übergängen 54 zwischen den Polen 50 und 52 gegenüberliegen. Aus Symmetriegründen bleiben die Statorelemente 26 und 32 insgesamt magnetisch neutral; das heißt im Luftspalt 42 bildet sich deshalb kein Magnetfeld aus.

Wird auf die Lenkwelle 10 ein Drehmoment ausgeübt, dann verdrehen sich die beiden Enden 38 und 40 der beiden Wellenabschnitte 12 und 14 zueinander, was in Figur 3b dargestellt ist. Die Finger 34 und 36 liegen nunmehr einem der Pole 50 und 52 gegenüber (in der Figur 3b dem Pol 50). Die radial inneren Finger 34 liegen zum Beispiel den Nordpolen und die radial äußeren Finger 36 den Südpolen gegenüber. Folglich wird das innere Statorelement 26 zu einem Nordpol und das äußere Statorelement 32 zu einem Südpol aufmagnetisiert. Der durch die Enden 38 und 40 begrenzte Spalt 42, welcher über den gesamten Umfang ausgebildet ist, stellt den magnetischen Rückschluss dar. Der Magnetfeldsensor 44, welcher ortsfest am nicht dargestellten Gehäuse der Lenkwelle 10 angebracht ist, taucht mit seiner empfindlichen Fläche in diesen Spalt 42 ein und misst die Stärke der magnetischen Induktion, welche ein direktes Maß für die Größe des Drehmoments ist. Die Stärke der magnetischen Induktion ist dabei bei konstantem Drehmoment ebenfalls über den gesamten Umfang des Spalts 42 konstant. Dies bedeutet, dass die Lenkwelle 10 mit dem Magnetring 24 und dem Stator 28 ungehindert gedreht werden kann. Der Sensor 44 arbeitet vollkommen berührungslos.

Bei negativem Drehmoment ändert sich die Richtung der relativen Verdrehung, so dass die Finger 34 den Polen 52 gegenüberliegen. Dadurch vertauschen sich die Polaritäten in den Statorelementen 26 und 32.

Von Vorteil ist, dass die Polteilung des Magnetringes 24 relativ fein gewählt werden kann, so dass der Linearitätsbereich sich nahezu mit dem zu messenden Winkelbereichen deckt. Es ergibt sich dadurch bei gleichem Drehmoment, verglichen mit dem Stand der Technik, ein größeres Ausgangssignal, was gleichbedeutend mit einem besseren Signal/Rauschverhältnis ist. Da der Magnetring aus einem kunststoffgebundenen Magnetmaterial hergestellt ist, kann dieser preisgünstiger und genauer gefertigt werden. Durch den im Verhältnis zum Luftspalt 42 großen Abstand der Finger 34 und 36 ist kein konkurrierender Nebenschluss vorhanden und die Magnetfeldlinien konzentrieren sich optimal auf den Magnetfeldsensor 44. Hierdurch wird das Ausgangssignal ebenfalls vergrößert. Da der Magnetfeldsensor 44 in axialer Richtung im Spalt 42 angeordnet ist, wird die Montage erleichtert, da der Magnetfeldsensor 44 direkt an einem Halter befestigt werden kann, welcher in axialer Richtung auf die Welle 10 aufgeschoben wird und von dieser zentriert wird. Dadurch entstehen geringe Montagetoleranzen.

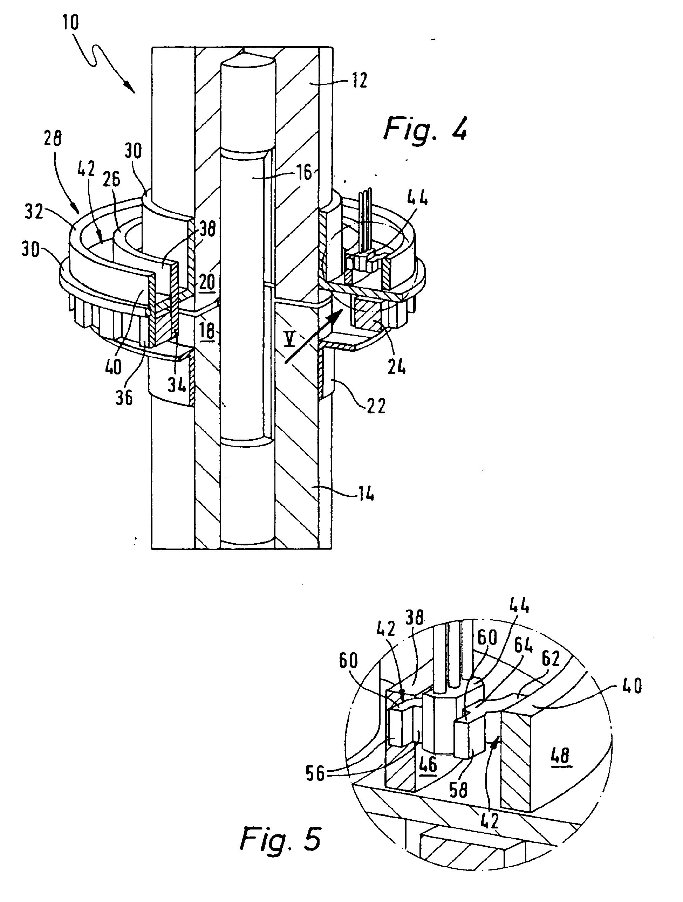

Was die Beschreibung des Magnetflusskonzentrators betrifft, so wird auf die nachfolgenden Ausführungen zu den Figuren 4 und 5 verwiesen.

In der Figur 4 ist erkennbar, dass die freien oberen Enden 38 und 40 der beiden Statorelemente 26 und 32 parallel zueinander stehen und den Spalt 42 bilden. In diesem Spalt 42 ist der Magnetfeldsensor 44 angeordnet, an dem ein erster Magnetflusskonzentrator 56 angeordnet ist, der zwischen dem Magnetfeldsensor 44 und dem Magnetflussring 46 liegt. Zwischen dem Magnetfeldsensor 44 und dem Magnetflussring 48 ist ein zweiter Magnetflusskonzentrator 58 angeordnet. Die beiden Magnetflusskonzentratoren 56 und 58 weisen jeweils einen Abschnitt 60 und 62 auf, die den Magnetflussringen 46 und 48 benachbart sind. Zwischen den beiden Abschnitten 60 und 62 befindet sich jeweils ein Abschnitt 64, der dem Magnetfeldsensor 44 benachbart ist. Die Abschnitte 60 und 62 gehen über eine Abkröpfung jeweils in den Abschnitt 64 über. Benachbart zu den Abschnitten 60 und 62 befindet sich der geringer Luftspalt 42, der diese von den Magnetflussringen 46 und 48 trennt. Die beiden Magnetflusskonzentratoren 56 und 58 und der Magnetfeldsensor 44 sind in einem gemeinsamen Gehäuse angeordnet und können in axialer Richtung zwischen die beiden Magnetflussringe 46 und 48 in den Stator 28 eingeschoben werden.

## Patentansprüche

1. Vorrichtung zum Bestimmen eines auf eine Welle (10) ausgeübten Drehmoments, wobei die Welle (10) einen ersten Wellenabschnitt (14) und einen zweiten Wellenabschnitt (12) aufweist und die beiden Wellenabschnitte (12 und 14) gegeneinander verdrehbar sind, mit einem den ersten Wellenabschnitt (14) umgebenden und mit diesem verbundenen Multipol-Magnetring (24) und einem am zweiten Wellenabschnitt (12) befestigten Statorhalter (30), wobei am Statorhalter (30) zwei Statorelemente (26, 32) befestigt sind und jedes Statorelement (26, 32) in axialer Richtung abragende Finger (34, 36) aufweist, die gleichmäßig zumindest über einen Teil des Umfangs verteilt angeordnet sind und zwischen sich Lücken aufweisen, **dadurch gekennzeichnet, dass** die Finger (36) des einen Statorelements (32) radial weiter außen angeordnet sind als die Finger (34) des zweiten Statorelements (26) und dass die Finger (34 und 36) zwischen sich den Magnetring (24) aufnehmen.

2. Vorrichtung nach Anspruch 1, **dadurch gekennzeichnet, dass**, die Finger (34, 36) den zwischen den Polen (50, 52) des Magnetringes (24) vorhandenen Lücken (54) zugeordnet sind.

3. Vorrichtung nach einem der vorhergehenden Ansprüche, **dadurch gekennzeichnet, dass** zwischen den Fingern (34) des einen Statorelements (26) und den Fingern (36) des anderen Statorelements (32) der Magnetring (24) angeordnet ist.

4. Vorrichtung nach einem der vorhergehenden Ansprüche, **dadurch gekennzeichnet, dass** die Finger (34, 36) der beiden Statorelemente (26, 32) einander radial gegenüberliegen.

5. Vorrichtung nach einem der vorhergehenden Ansprüche, **dadurch gekennzeichnet, dass** die Magnetpole (50, 52) des Magnetringes (24) radial polarisiert sind.

6. Vorrichtung nach einem der vorhergehenden Ansprüche, **dadurch gekennzeichnet, dass** die Finger (34, 36) der Statorelemente (26, 32) jedem zweiten Magnetpol (50 bzw. 52) zugeordnet sind.

7. Vorrichtung nach einem der vorhergehenden Ansprüche, **dadurch gekennzeichnet, dass** jedes Statorelement (26, 32) einen Magnetflussring (46, 48) aufweist, von welchem die Finger (34, 36) abragen und die Magnetflussringe (46, 48) der beiden Statorelemente (26, 32) einen Magnetfeldsensor (44) zwischen sich aufnehmen.

8. Vorrichtung nach Anspruch 7, **dadurch gekennzeichnet, dass** die freie Außenkante (38, 40) wenigstens eines der beiden Magnetflussringe (46, 48) in Richtung zueinander abgebogen oder abgewinkelt ist beziehungsweise sind.

9. Vorrichtung nach Anspruch 8, **dadurch gekennzeichnet, dass** der Magnetflusssensor (44) zwischen den beiden Außenkanten (38, 40) angeordnet ist.

10. Vorrichtung nach einem der vorhergehenden Ansprüche, **dadurch gekennzeichnet, dass** die Anzahl der Finger (34 oder 36) eines Statorelements (26 oder 32) der Anzahl der Polpaare des Magnetringes (24) entsprechen.

11. Vorrichtung nach einem der vorhergehenden Ansprüche, **dadurch gekennzeichnet, dass** jedes Statorelement (26 oder 32) 36 Finger (34 oder 36) aufweist.

12. Vorrichtung nach einem der vorhergehenden Ansprüche, **dadurch gekennzeichnet, dass** der Magnetring (24) aus einem kunststoffgebundenen Magnetmaterial besteht.

13. Vorrichtung nach einem der vorhergehenden Ansprüche, **dadurch gekennzeichnet, dass** die Finger (34, 36) eines jeden Statorelements (26, 32) über einen Magnetflussring (46, 48) miteinander verbunden sind, die Magnetflussringe (46, 48) einen Abstand zueinander aufweisen und zwischen den Magnetflussringen (46, 48) ein Magnetfeldsensor (44) angeordnet ist, wobei dem Magnetfeldsensor (44) wenigstens ein Magnetflusskonzentrator (56, 58) zugeordnet ist.

14. Vorrichtung nach Anspruch 13, **dadurch gekennzeichnet, dass** der Magentflusskonzentrator (56, 58) zwischen den Magnetflussringen (46, 48) vorgesehen ist.

15. Vorrichtung nach Anspruch 13 oder 14, **dadurch gekennzeichnet, dass** zwischen dem Magnetfeldsensor (44) und jedem Magnetflussring (46, 48) ein Magnetflusskonzentrator (56, 58) angeordnet ist.

16. Vorrichtung nach einem der Ansprüche 13 bis 15, **dadurch gekennzeichnet, dass** der Magnetflusskonzentrator (56, 58) sich benachbart zum Magnetflussring (46, 48) über einen Teil dessen Umfangs erstreckt.

17. Vorrichtung nach einem der Ansprüche 13 bis 16, **dadurch gekennzeichnet, dass** der Magnetflusskonzentrator (56, 58) der Krümmung des Magnetflussringes (46, 48) angepasst ist.

18. Vorrichtung nach einem der Ansprüche 13 bis 17, **dadurch gekennzeichnet, dass** zwischen dem Magnetflusskonzentrator (56, 58) und dem Magnetflussring (46, 48) ein enger Luftspalt (42) vorhanden ist.

19. Vorrichtung nach Anspruch 18, **dadurch gekennzeichnet, dass** der Luftspalt (42) in einer in Umfangsrichtung sich erstreckenden Fläche verläuft.

20. Vorrichtung nach einem der Ansprüche 13 bis 19, **dadurch gekennzeichnet, dass** der Magnetflusskonzentrator (56, 58) einen dem Magnetflussring (46, 48) benachbarten Absachnitt (60, 62) und einen dem Magnetfeldsensor (44) benachbarten Abschnitt (64) aufweist.

21. Vorrichtung nach Anspruch 20, **dadurch gekennzeichnet, dass** die Abschnitte (60, 62, 64) in zueinander versetzten oder winklig zueinander stehenden Ebenen oder Flächen angeordnet sind.

22. Vorrichtung nach Anspruch 20 oder 21, **dadurch gekennzeichnet, dass** die Abschnitte (60, 62, 64) über eine Abkröpfung ineinander übergehen.

23. Vorrichtung nach einem der Ansprüche 20 bis 22, **dadurch gekennzeichnet, dass** der dem Magnetflussring (46, 48) benachbarte Abschnitt (60, 62) breiter ist als die Breite eines Fingers (34, 36), insbesondere doppelt so breit ist.

24. Vorrichtung nach einem der Ansprüche 20 bis 23, **dadurch gekennzeichnet, dass** der beziehungsweise die Magnetflusskonzentrator(en) (56, 58) und der Magnetfeldsensor (44) in einem gemeinsamen Halter (68) und/oder Gehäuse (66) angeordnet sind.

25. Vorrichtung nach einem der Ansprüche 13 bis 24, **dadurch gekennzeichnet, dass** der Magnetflusskonzentrator (56, 58) sich über wenigstens eine Fläche erstreckt, die der Breite von zwei einander benachbarten Fingern (34 oder 36) eines Statorelements (26 oder 32) entspricht.

## Claims

1. Apparatus for determining a torque exerted on a shaft (10), wherein the shaft (10) has a first shaft section (14) and a second shaft section (12), and the two shaft sections (12 and 14) are rotatable with respect to one another, comprising a multipole magnet ring (24), which surrounds the first shaft section (14) and is connected thereto, and a stator holder (30), which is fastened on the second shaft section (12), wherein two stator elements (26, 32) are fastened on the stator holder (30), and each stator element (26, 32) has fingers (34, 36) protruding in the axial direction which are arranged distributed uniformly at least over part of the circumference and have gaps in-between said fingers, **characterized in that** the fingers (36) of one stator element (32) are arranged radially further outwards than the fingers (34) of the second stator element (26), and **in that** the fingers (34 and 36) receive the magnet ring (24) between them.

2. Apparatus according to Claim 1, **characterized in that** the fingers (34, 36) are assigned to the gaps (54) provided between the poles (50, 52) of the magnet ring (24).

3. Apparatus according to one of the preceding claims, **characterized in that** the magnet ring (24) is arranged between the fingers (34) of one stator element (26) and the fingers (36) of the other stator element (32).

4. Apparatus according to one of the preceding claims, **characterized in that** the fingers (34, 36) of the two stator elements (26, 32) are radially opposite one another.

5. Apparatus according to one of the preceding claims, **characterized in that** the magnet poles (50, 52) of the magnet ring (24) are radially polarized.

6. Apparatus according to one of the preceding claims, **characterized in that** the fingers (34, 36) of the stator elements (26, 32) are assigned to every second magnet pole (50 and 52, respectively).

7. Apparatus according to one of the preceding claims, **characterized in that** each stator element (26, 32) has a magnetic flux ring (46, 48), from which the fingers (34, 36) protrude, and the magnetic flux rings (46, 48) of the two stator elements (26, 32) receive a magnetic field sensor (44) between them.

8. Apparatus according to Claim 7, **characterized in that** the free outer edge (38, 40) of at least one of the two magnetic flux rings (46, 48) is or are bent back or angled towards one another.

9. Apparatus according to Claim 8, **characterized in that** the magnetic flux sensor (44) is arranged between the two outer edges (38, 40).

10. Apparatus according to one of the preceding claims, **characterized in that** the number of fingers (34 or 36) of a stator element (26 or 32) corresponds to the number of pole pairs of the magnet ring (24).

11. Apparatus according to one of the preceding claims, **characterized in that** each stator element (26 or 32) has 36 fingers (34 or 36).

12. Apparatus according to one of the preceding claims, **characterized in that** the magnet ring (24) consists of a plastic-bonded magnetic material.

13. Apparatus according to one of the preceding claims, **characterized in that** the fingers (34, 36) of each stator element (26, 32) are connected to one another via a magnetic flux ring (46, 48), the magnetic flux rings (46, 48) are spaced apart from one another and a magnetic field sensor (44) is arranged between the magnetic flux rings (46, 48), wherein at least one magnetic flux concentrator (56, 58) is assigned to the magnetic field sensor (44).

14. Apparatus according to Claim 13, **characterized in that** the magnetic flux concentrator (56, 58) is provided between the magnetic flux rings (46, 48).

15. Apparatus according to Claim 13 or 14, **characterized in that** a magnetic flux concentrator (56, 58) is arranged between the magnetic field sensor (44) and each magnetic flux ring (46, 48).

16. Apparatus according to one of Claims 13 to 15, **characterized in that** the magnetic flux concentrator (56, 58) extends, adjacent to the magnetic flux ring (46, 48), over part of the circumference thereof.

17. Apparatus according to one of Claims 13 to 16, **characterized in that** the magnetic flux concentrator (56, 58) is matched to the curvature of the magnetic flux ring (46, 48).

18. Apparatus according to one of Claims 13 to 17, **characterized in that** a narrow air gap (42) is provided between the magnetic flux concentrator (56, 58) and the magnetic flux ring (46, 48).

19. Apparatus according to Claim 18, **characterized in that** the air gap (42) runs in a surface extending in the circumferential direction.

20. Apparatus according to one of Claims 13 to 19, **characterized in that** the magnetic flux concentrator (56, 58) has a section (60, 62), which is adjacent to the magnetic flux ring (46, 48), and a section (64) which is adjacent to the magnetic field sensor (44).

21. Apparatus according to Claim 20, **characterized in that** the sections (60, 62, 64) are arranged in planes or surfaces which are offset with respect to one another or are at an angle with respect to one another.

22. Apparatus according to Claim 20 or 21, **characterized in that** the sections (60, 62, 64) merge with one another via a bent-back portion.

23. Apparatus according to one of Claims 20 to 22, **characterized in that** the section (60, 62) adjacent to the magnetic flux ring (46, 48) is wider than the width of a finger (34, 36), in particular twice as wide.

24. Apparatus according to one of Claims 20 to 23, **characterized in that** the magnetic flux concentrator(s) (56, 58) and the magnetic field sensor (44) are arranged in a common holder (68) and/or housing (66).

25. Apparatus according to one of Claims 13 to 24, **characterized in that** the magnetic flux concentrator (56, 58) extends over at least one surface, which corresponds to the width of two mutually adjacent fingers (34 or 36) of a stator element (26 or 32).

## Revendications

1. Dispositif pour déterminer un couple exercé sur un arbre (10), l'arbre (10) présentant une première section d'arbre (14) et une deuxième section d'arbre (12) et les deux sections d'arbre (12 et 14) pouvant tourner l'une par rapport à l'autre, comprenant une bague magnétique multipolaire (24) entourant la première section d'arbre (14) et connectée à celle-ci, et un porte-stator (30) fixé à la deuxième section d'arbre (12), deux éléments statoriques (26, 32) étant fixés au porte-stator (30) et chaque élément statorique (26, 32) présentant des doigts (34, 36) faisant saillie dans la direction axiale, lesquels sont répartis uniformément au moins sur une partie de la périphérie et présentent entre eux des espaces vides, **caractérisé en ce que** les doigts (36) de l'un des éléments statoriques (32) sont disposés radialement plus à l'extérieur que les doigts (34) du deuxième élément statorique (26) et **en ce que** les doigts (34 et 36) reçoivent entre eux la bague magnétique (24).

2. Dispositif selon la revendication 1, **caractérisé en ce que** les doigts (34, 36) sont associés aux espaces vides (54) prévus entre les pôles (50, 52) de la bague magnétique (24).

3. Dispositif selon l'une quelconque des revendications précédentes, **caractérisé en ce qu'**entre les doigts (34) de l'un des éléments statoriques (26) et les doigts (36) de l'autre élément statorique (32) est disposée la bague magnétique (24).

4. Dispositif selon l'une quelconque des revendications précédentes, **caractérisé en ce que** les doigts (34, 36) des deux éléments statoriques (26, 32) sont radialement opposés les uns aux autres.

5. Dispositif selon l'une quelconque des revendications précédentes, **caractérisé en ce que** les pôles magnétiques (50, 52) de la bague magnétique (24) sont polarisés radialement.

6. Dispositif selon l'une quelconque des revendications précédentes, **caractérisé en ce que** les doigts (34, 36) des éléments statoriques (26, 32) sont associés à chaque deuxième pôle magnétique (50, respectivement 52).

7. Dispositif selon l'une quelconque des revendications précédentes, **caractérisé en ce que** chaque élément statorique (26, 32) présente une bague à flux magnétique (46, 48) depuis laquelle font saillie les doigts (34, 36) et les bagues à flux magnétique (46, 48) des deux éléments statoriques (26, 32) reçoivent entre elles un capteur de champ magnétique (44).

8. Dispositif selon la revendication 7, **caractérisé en ce que** l'arête extérieure libre (38, 40) d'au moins l'une des deux bagues à flux magnétique (46, 48) est/sont cintrée(s) ou coudée(s) l'une vers l'autre.

9. Dispositif selon la revendication 8, **caractérisé en ce que** le capteur de flux magnétique (44) est disposé entre les deux arêtes extérieures (38, 40).

10. Dispositif selon l'une quelconque des revendications précédentes, **caractérisé en ce que** le nombre des doigts (34 ou 36) d'un élément statorique (26 ou 32) correspond au nombre des paires de pôles de la bague magnétique (24).

11. Dispositif selon l'une quelconque des revendications précédentes, **caractérisé en ce que** chaque élément statorique (26 ou 32) présente 36 doigts (34 ou 36).

12. Dispositif selon l'une quelconque des revendications précédentes, **caractérisé en ce que** la bague magnétique (24) se compose d'un matériau magnétique lié au plastique.

13. Dispositif selon l'une quelconque des revendications précédentes, **caractérisé en ce que** les doigts (34, 36) de chaque élément statorique (26, 32) sont connectés les uns aux autres par le biais d'une bague à flux magnétique (46, 48), les bagues à flux magnétique (46, 48) présentent une distance les unes par rapport aux autres et entre les bagues à flux magnétique (46, 48) est disposé un capteur de champ magnétique (44), au moins un concentrateur de flux magnétique (56, 58) étant associé au capteur de champ magnétique (44).

14. Dispositif selon la revendication 13, **caractérisé en ce que** le concentrateur de flux magnétique (56, 58) est prévu entre les bagues à flux magnétique (46, 48).

15. Dispositif selon la revendication 13 ou 14, **caractérisé en ce qu'**entre le capteur de champ magnétique (44) et chaque bague à flux magnétique (46, 48) est disposé un concentrateur de flux magnétique (56, 58).

16. Dispositif selon l'une quelconque des revendications 13 à 15, **caractérisé en ce que** le concentrateur de flux magnétique (56, 58) s'étend à côté de la bague à flux magnétique (46, 48) sur une partie de sa périphérie.

17. Dispositif selon l'une quelconque des revendications 13 à 16, **caractérisé en ce que** le concentrateur de flux magnétique (56, 58) est adapté à la courbure de la bague à flux magnétique (46, 48).

18. Dispositif selon l'une quelconque des revendications 13 à 17, **caractérisé en ce qu'**entre le concentrateur de flux magnétique (56, 58) et la bague à flux magnétique (46, 48) est prévu un entrefer étroit (42).

19. Dispositif selon la revendication 18, **caractérisé en ce que** l'entrefer (42) s'étend dans une surface s'étendant dans la direction périphérique.

20. Dispositif selon l'une quelconque des revendications 13 à 19, **caractérisé en ce que** le concentrateur de flux magnétique (56, 58) présente une portion (60, 62) adjacente à la bague à flux magnétique (46, 48) et une portion (64) adjacente au capteur de champ magnétique (44).

21. Dispositif selon la revendication 20, **caractérisé en ce que** les portions (60, 62, 64) sont disposées dans des plans ou des surfaces disposés de manière décalée ou inclinée les uns par rapport aux autres.

22. Dispositif selon la revendication 20 ou 21, **caractérisé en ce que** les portions (60, 62, 64) se prolongent les unes dans les autres par le biais d'un coude.

23. Dispositif selon l'une quelconque des revendications 20 à 22, **caractérisé en ce que** la portion (60, 62) adjacente à la bague à flux magnétique (46, 48) est plus large que la largeur d'un doigt (34, 36), en particulier est deux fois plus large.

24. Dispositif selon l'une quelconque des revendications 20 à 23, **caractérisé en ce que** le ou les concentrateurs de flux magnétique (56, 58) et le capteur de champ magnétique (44) sont disposés dans un support commun (68) et/ou un boîtier commun (66).

25. Dispositif selon l'une quelconque des revendications 13 à 24, **caractérisé en ce que** le concentrateur de flux magnétique (56, 58) s'étend sur au moins une surface qui correspond à la largeur de deux doigts mutuellement adjacents (34 ou 36) d'un élément statorique (26 ou 32).
